# FASCICULE DE BREVET EUROPEEN

(11) **EP 2 291 506 B1**
(45) Date de publication et mention de la délivrance du brevet: **04.01.2012**
(21) Numéro de dépôt: 09746018.2
(22) Date de dépôt: 29.04.2009
(51) Int. Cl.: C12G 1/08

(54) **PROCEDE DE DEGORGEMENT DE VINS MOUSSEUX**
VERFAHREN ZUR ENTFERNUNG VON ABLAGERUNGEN AUS SCHAUMWEINEN
METHOD FOR THE REMOVAL OF SEDIMENT FROM SPARKLING WINES

(30) Priorité: 30.04.2008 FR 0852947
(43) Date de publication de la demande: 09.03.2011
(73) Titulaire: MHCS, 51200 Epernay (FR)
(72) Inventeur: DUGAS, Freddy, F-51200 Epernay (FR)
(74) Mandataire: Cabinet Plasseraud
(86) Numéro de dépôt international: PCT/FR2009/050796
(87) Numéro de publication internationale: WO 2009/138699

(56) Documents cités:
- WO-A-2005/094960
- WO-A1-2004/096970
- ES-T3- 2 147 194
- FR-A- 379 124
- FR-A- 1 211 569
- FR-A- 1 506 569
- FR-A- 2 060 991
- FR-A- 2 691 160
- US-A- 2 106 192

## Description

La présente invention concerne un procédé de dégorgement de vins mousseux élaborés par la méthode traditionnelle destiné à retirer la capsule obturant le goulot d'une bouteille contenant du vin mousseux et un appareil de dégorgement de vins mousseux, comprenant :
- un bâti,
- un mécanisme basculant comprenant :
- un support adapté pour supporter une bouteille dans une position prédéterminée dans laquelle ladite bouteille s'étend longitudinalement selon un axe longitudinal voisin d'un axe moyen fixe par rapport audit support, ledit support étant monté mobile sur le bâti entre une position basse, dans laquelle le goulot de la bouteille est incliné vers le bas, et une position haute, dans laquelle le goulot de la bouteille est incliné vers le haut, et
- un mécanisme de décapsulage pourvu d'au moins un couteau décapsuleur, ledit mécanisme de décapsulage étant monté mobile sur le support et commandé en synchronisme avec ledit support pour que le couteau décapsuleur retire la capsule, lorsque le support est dans une position angulaire déterminée par rapport à l'horizontale.

De tels appareils de dégorgement de vins mousseux permettent de procéder à un dégorgement automatique de bouteilles contenant du vin mousseux, en particulier du champagne.

De manière connue en soi, les bouteilles de vins mousseux subissent avant leur mise dans le commerce, une opération de dégorgement destinée à permettre le retrait du dépôt, provenant de la dégradation des levures, qui s'est formé lors de la fermentation du vin et qui vient se déposer dans le goulot de la bouteille au cours du temps. Cette opération de dégorgement, que l'on effectue généralement juste avant l'expédition du produit, consiste à arracher la capsule qui obture la bouteille et à permettre l'éjection du dépôt, sous l'effet de la pression contenue dans la bouteille. La bouteille est ensuite rebouchée avec un bouchon traditionnel en liège maintenu par un muselet, en vue de sa commercialisation ou d'une ultime opération de maturation. L'opération de dégorgement est un succès lorsque deux objectifs sont atteints, d'une part l'expulsion complète du dépôt contenant les résidus de la fermentation et d'autre part une perte limitée en vin, essentiellement sous forme de mousse. Cette opération est donc très délicate. Lorsque cette opération est réalisée manuellement, elle requiert une grande habileté acquise par l'expérience de la part de l'opérateur.

On connaît des appareils de dégorgement de vins mousseux automatiques qui comportent un support basculant porteur d'un élément pivotant pourvu d'un couteau décapsuleur. Ce dernier, positionné derrière le rebord plissé de la capsule permet, lors de son pivotement, d'écarter la capsule du goulot. Cette opération de débouchage doit être réalisée avec le plus grand soin. En effet, si l'on veut réussir l'opération de dégorgement, l'ouverture de la bouteille, qui libère le gaz sous pression contenu dans cette dernière, doit être réalisée lors d'une étape de basculement de la bouteille avec à une inclinaison précise du goulot de la bouteille.

Un appareil de dégorgement comportant un tel un support basculant est décrit notamment dans le document WO2004/096970.

Les documents FR379124, FR2691160, FR1506569, FR1211569, US2106192 et FR2060991 divulguent également des appareils et des procédés de dégorgement de vins mousseux qui sont adaptés pour un type de bouteille seulement.

Cependant, les appareils de dégorgement connus sont généralement adaptés pour un type de bouteille donné, en particulier pour des bouteilles classiques qui ont une capacité de 75 cl. Toutefois, les bouteilles peuvent être de différentes capacités allant notamment du quart (18,75 cl ou 20 cl) à des capacités beaucoup plus importantes telles que le magnum (1,5 1), le jéroboam (3 1), ou plus. Or, les appareils de dégorgement connus ne sont pas adaptés aux grandes capacités à partir du jéroboam et au-delà. En pratique, le dégorgement des bouteilles de grandes capacités se fait manuellement, ce qui est particulièrement pénible, voire dangereux pour l'opérateur compte tenu du poids de la bouteille et de la force avec laquelle le dépôt est expulsé hors de la bouteille. En outre, la géométrie même de la bouteille, en particulier le diamètre et la longueur de son goulot et le positionnement de la bague située sur le goulot par rapport au buvant (partie d'extrémité libre du goulot), etc., peuvent varier pour une capacité donnée d'une bouteille à l'autre et/ou d'un fabricant de bouteilles à un autre. Il peut donc également s'avérer très utile de pouvoir disposer d'un appareil de dégorgement qui s'adapte facilement à toutes ces variations, y compris pour les grandes capacités au-delà du jéroboam.

De plus, l'inconvénient de tels appareils de dégorgement connus est que la bouteille doit être disposée de manière très précise par l'opérateur pour que le couteau décapsuleur puisse être positionné correctement. On comprend que lorsque le couteau décapsuleur n'est pas positionné correctement par rapport à la capsule, l'opération de débouchage peut ne pas aboutir de manière satisfaisante et/ou entraîner la fracture du buvant par le couteau décapsuleur. Dans ce dernier cas, la bouteille est inutilisable et le vin est généralement perdu. C'est également le cas lorsque le dépôt n'a pas été complètement expulsé. La bouteille et le vin qu'elle contient sont alors écartés de la production. En effet, on constate que lorsque le positionnement du couteau décapsuleur est fixe par rapport à l'axe moyen du support, il s'ensuit que dès que l'axe de la bouteille ne correspond pas à l'axe moyen, le couteau décapsuleur risque ne de pas être bien positionné, ce qui peut entraîner les inconvénients précités.

Le but de l'invention est de permettre le dégorgement semi-automatique de manière fiable et reproductible pour différentes géométries de bouteilles de vins mousseux.

A cet effet, un premier objet de l'invention est de fournir un appareil de dégorgement adaptable à tous types de bouteilles de vins mousseux, et tout particulièrement aux bouteilles de grandes capacités. Un tel appareil de dégorgement selon l'invention permet de s'adapter facilement aux demandes du marché au niveau des bouteilles de grandes capacités et grâce à son usage très simple permet à un opérateur non spécialisé de réaliser avec succès l'opération de dégorgement sans efforts excessifs et sans risques pour l'opérateur lors des étapes de manipulations.

Selon l'invention, le ledit couteau décapsuleur de l'appareil de dégorgement est mobile par rapport au mécanisme de décapsulage pour se rapprocher et s'éloigner de l'axe moyen, ledit couteau décapsuleur étant sollicité vers ledit axe moyen.

Ainsi, l'appareil permet une certaine variation dans le positionnement de l'axe de la bouteille, puisque le couteau est mobile par rapport à l'axe moyen et sa position s'adapte à celle du goulot de la bouteille.

Dans divers modes de réalisation de l'appareil de dégorgement selon l'invention, on peut éventuellement avoir recours en outre à l'une et/ou l'autre des dispositions suivantes :
- le couteau décapsuleur coulisse sous son propre poids dans le mécanisme de décapsulage,
- le couteau décapsuleur présente un bord d'extrémité libre qui est incliné par rapport à l'horizontale et qui est biseauté,
- le dispositif décapsulant comprend deux couteaux décapsuleurs,

- l'inclinaison du bord d'extrémité libre de l'un des deux couteaux décapsuleurs est opposée à l'inclinaison du bord d'extrémité libre de l'autre des deux couteaux décapsuleurs,
- le support est coulissant par rapport au mécanisme basculant selon l'axe XX',
- l'appareil de dégorgement comprend en outre un galet monté rotatif autour d'un axe fixé au bâti de manière réglable, et le mécanisme basculant comprend en outre une portion de came destinée à venir au contact dudit galet pour faire pivoter le mécanisme de décapsulage et ainsi retirer la capsule,
- le mécanisme de décapsulage comporte une partie mobile et des organes de compensation permettant d'optimiser la position du couteau décapsuleur par rapport au goulot,
- l'appareil de dégorgement comprend en outre des organes de réglage de l'axe du galet qui permettent de régler le synchronisme du mécanisme de décapsulage,
- l'appareil de dégorgement comprend en outre des organes de réglage permettant le réglage du mécanisme de décapsulage par rapport au support, en hauteur, en inclinaison et/ou en écartement,
- l'appareil de dégorgement comprend en outre un organe formant bouchon destiné à obturer provisoirement le goulot de la bouteille après retrait de la capsule, ledit organe formant bouchon étant mobile entre une position d'ouverture dans laquelle il est écarté de la bouteille et une position de fermeture dans laquelle il obture le goulot de la bouteille.

Un second objet de l'invention est de fournir un procédé qui permet de dégorger de manière fiable et reproductible tous types de bouteilles de vins mousseux.

Selon l'invention, le procédé comprend les étapes suivantes :
- mise en place de la bouteille sur le support d'un appareil de dégorgement selon l'une quelconque des revendications précédentes, lorsque ledit support est en position basse,
- mise en position automatique du couteau décapsuleur par rapport à la bouteille,
- basculement automatique de la bouteille vers la position haute et retrait automatique de la capsule de la bouteille pendant ledit basculement, avec éjection simultanée du dépôt contenu dans le goulot de la bouteille.

Ainsi, le procédé permet une certaine variation dans le positionnement de l'axe de la bouteille par rapport à l'axe moyen, puisque le couteau est mobile par rapport à ce dernier et sa position s'adapte automatiquement à celle du goulot de la bouteille.

Dans divers modes de réalisation du procédé de dégorgement selon l'invention, on peut éventuellement avoir recours en outre à l'une et/ou l'autre des dispositions suivantes :
- la mise en position automatique du couteau est réalisée par soulèvement puis relâchement automatique du couteau entre le bord libre des crénelures de la capsule et la bague de la bouteille lors de la mise en place de la bouteille,
- dès la fin du retrait de la capsule, la bouteille est automatiquement obturée,
- le support coulisse vers le couteau décapsuleur, avant le basculement automatique de la bouteille vers la position haute.

L'invention sera bien comprise et ses avantages apparaîtront mieux à la lecture de la description détaillée qui suit, de l'un de ses modes de réalisation donné à titre d'exemple non limitatif.

La description se réfère aux dessins annexés sur lesquels :
- la figure 1 représente une vue en perspective de l'appareil de dégorgement selon l'invention en position basse,
- la figure 2 représente une vue en perspective de la partie de l'appareil de dégorgement de la figure 1 illustrant en détails le mécanisme de décapsulage,
- la figure 3 représente une vue de côté d'une partie du mécanisme de décapsulage,
- la figure 4 représente une vue du côté opposé de la partie du mécanisme de décapsulage de la figure 3,
- la figure 5 représente une vue partielle en perspective de l'appareil de dégorgement selon l'invention en position haute, et
- la figure 6 représente une vue en perspective de l'appareil de dégorgement selon l'invention en position intermédiaire.

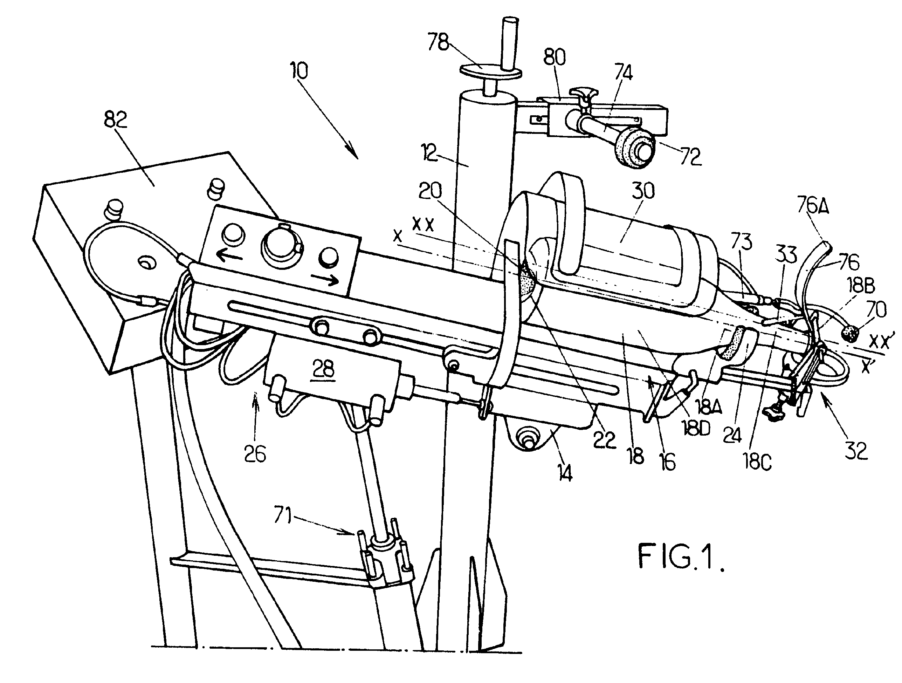

La figure 1 illustre un appareil de dégorgement de vins mousseux 10 comprenant un bâti 12 et un mécanisme basculant 14. Le mécanisme basculant 14 comporte un support 16 adapté pour supporter une bouteille 18 de vin mousseux.

Les bouteilles, en particulier de vins mousseux, présentent généralement une partie évasée communément appelée gris de col 18A qui relie le corps de la bouteille 18D au goulot 18C. Le goulot 18C s'étend du gris de col 18A jusqu'à une partie d'extrémité par laquelle on verse le vin et qui est communément dénommée le buvant 18B. Une bague 44 formant un renflement extérieur, s'étend circulairement autour du goulot 18C au voisinage du buvant 18B. Par ailleurs, les bouteilles destinées à contenir des vins mousseux, en particulier des vins de champagne, présentent un fond fortement creusé 22 pour résister à la pression de gaz créée qui peut atteindre jusqu'à six atmosphères.

Le support 16 comporte une calotte formant butée 20 et une bague semi-circulaire 24 et définit un axe moyen X-X' fixe. La bouteille 18 est maintenue sur le support 16, d'une part, par la calotte formant butée 20 qui épouse sensiblement la forme du creux 22 formé dans le fond de la bouteille 18 et, d'autre part, par la bague semi-circulaire 24 sur laquelle repose le gris de col 18A de la bouteille 18. La calotte formant butée 20 peut être écartée ou rapprochée de la bague semi-circulaire 24 de manière à venir bloquer la bouteille 18 sur le support 16. A cet effet, il peut être prévu des moyens de déplacement qui permettent de faire coulisser le support 16 et, en l'espèce, la calotte formant butée 20, par rapport au bâti 14 le long de l'axe X-X'. A titre d'exemple, ces moyens de déplacement peuvent être commandés par des moyens pneumatiques 26 de type connu, comportent en particulier un vérin 28 relié à la calotte formant butée 20. Il est également possible de prévoir des calottes de taille différentes adaptées à chaque capacité de bouteille.

Un capot 30 pivotant monté articulé sur le support 16 permet de recouvrir au moins partiellement le corps 18D de la bouteille 18, afin de protéger l'opérateur.

Avant la mise en place de la bouteille 18 sur l'appareil de dégorgement 10, le mécanisme basculant 14 est basculé dans sa position basse, tel qu'illustré sur la figure 1. Dans cette position basse, la bouteille 18 peut être mise en place sur le support 16 en ayant son goulot 18B incliné vers le bas (en étant situé en dessous de l'horizontale par rapport au fond de la bouteille). Ainsi, dans cette position basse, le dépôt formé dans la bouteille 18 reste bien déposé dans le goulot 18C de la bouteille, en particulier dans le gris de col 18A.

Après sa mise en place sur le support 16 et coulissement de la calotte formant butée 20, la bouteille 18 qui s'étend longitudinalement selon un axe longitudinal XX-XX' voisin de l'axe moyen X-X', est bien maintenue et l'opération de dégorgement peut débuter. A ce stade, la bouteille 18 est fermée par une capsule 36 qui présente généralement un rebord plissé avec des crénelures 40 qui viennent recouvrir le buvant 18B et une partie de l'extérieur du goulot 18C jusqu'au voisinage de la bague semi-circulaire 24.

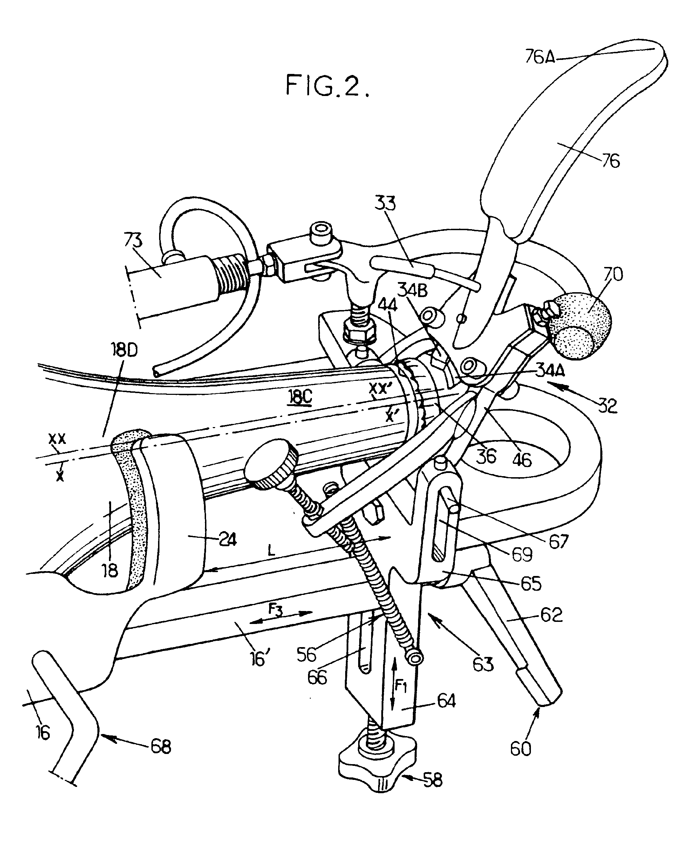

Le mécanisme basculant 14 comporte en outre un mécanisme de décapsulage 32 pourvu d'au moins un couteau décapsuleur, en l'espèce deux couteaux décapsuleurs 34A et 34B. Le mécanisme de décapsulage 32 est monté mobile sur le support 16 en étant commandé en synchronisme avec lui, pour que les couteaux décapsuleurs 34A et 34B retirent la capsule 36, lorsque le support 16 est dans une position angulaire déterminée par rapport à l'horizontale, tel qu'illustré sur la figure 2.

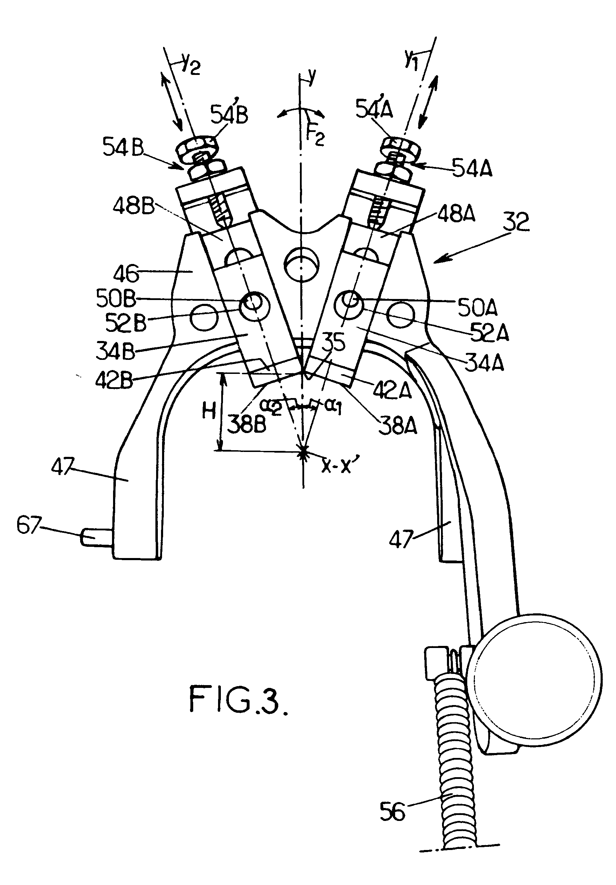

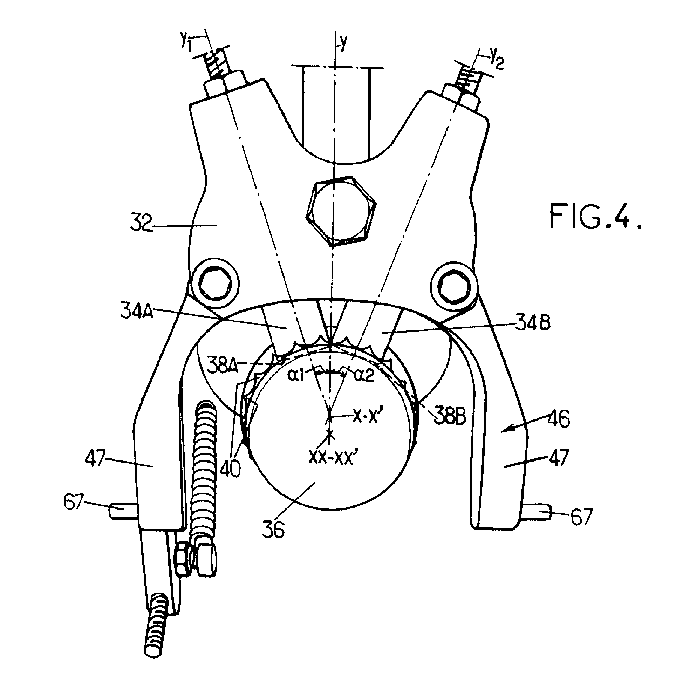

En référence à la figure 3, chacun des couteaux décapsuleurs 34A, 34B présente un bord d'extrémité libre, respectivement 38A et 38B destiné à s'insérer à l'arrière de la capsule 36 entre le bord libre de la capsule et le buvant 18B. Le bord d'extrémité libre 38A et 38B est préférentiellement incliné par rapport à l'horizontale de manière à pouvoir être apte à coopérer avec l'une au moins des crénelures 40 de la capsule 36, comme illustré en détails sur la figure 4.

L'appareil de dégorgement 10 illustré sur les figures 3 et 4 comporte préférentiellement deux couteaux décapsuleurs, mais on comprend qu'il pourrait éventuellement comporter un seul couteau décapsuleur disposé par exemple verticalement.

Dans le mode de réalisation illustré sur les figures, les bords d'extrémité libres 38A et 38B des couteaux décapsuleurs 34A et 34B présentent une inclinaison opposée, comme mieux détaillé par la suite, de manière à garantir que l'un au moins des couteaux puisse coopérer avec l'une au moins des crénelures 40 du bord libre de la capsule 36. Le couteau décapsuleur 34A, respectivement 34B, présente de préférence une portion d'extrémité 42A, respectivement 42B qui est biseautée. La portion d'extrémité libre 42A, respectivement 42B ainsi biseautée, permet à chacun des couteaux décapsuleurs 34A, respectivement 34B, de bien venir s'insérer entre la bague 44 de la bouteille 18 et le bord libre des crénelures 40 de la capsule 36.

En revenant à la figure 3, chacun des couteaux décapsuleurs 34A et 34B peut coulisser sous son propre poids dans le mécanisme de décapsulage 32, ce qui permet à chacun d'eux d'être libre en translation et ainsi de pouvoir se rapprocher et s'éloigner de l'axe moyen X-X'. Les couteaux 34A et 34B étant mobiles, sont sollicités naturellement vers l'axe moyen X-X' sous l'effet de leur propre poids.

En fait, le mécanisme de décapsulage comporte un étrier 46 sur lequel sont fixés les couteaux décapsuleurs 34A et 34B, qui est pourvu de deux rainures 48A et 48B préférentiellement respectivement inclinées par rapport à la verticale. La rainure 48A s'étend longitudinalement selon un axe Y1 incliné par rapport à l'axe vertical Y d'un angle α1. Il en va de même pour la deuxième rainure 48B qui s'étend longitudinalement selon un axe Y2 incliné d'un angle α2 par rapport à l'axe vertical Y. Ainsi, la rainure 48A est symétriquement opposée à la rainure 48B, par rapport à un plan qui passerait par l'axe moyen X-X' et l'axe vertical Y. En particulier, lorsque l'étrier 46 est centré par rapport à l'axe moyen X-X', ces deux angles α1 et α2 sont égaux.

Ainsi, le bord d'extrémité libre 38A, 38B de chacun des couteaux décapsuleurs 34A et 34B est incliné par rapport à l'horizontale d'un angle α1, respectivement α2.

Chaque rainure 48A, respectivement 48B, est adaptée pour venir loger un couteau décapsuleur 34A, respectivement 34B, de manière coulissante. En l'absence de bouteille, les couteaux décapsuleurs 34A et 34B coulissent jusqu'à ce que leurs bords d'extrémité libre 38A et 38B viennent en contact l'un avec l'autre en un point de contact 35 (voir figure 3).

Toutefois, afin de retenir les couteaux décapsuleurs 34A et 34B dans ces rainures 48A et 48B et éviter qu'ils ne tombent hors du mécanisme décapsuleur 32, les rainures 48A et 48B sont chacune pourvues d'un ergot 50A, respectivement 50B, qui coopère avec une lumière 52A, respectivement 52B, formée dans le couteau 34A, respectivement 34B. Les lumières 52A et 52B sont préférentiellement choisies de taille plus importante que celle des ergots 50A et 50B, de sorte qu'une mobilité de chacun des couteaux 34A et 34B est possible autour de chacun des ergots 50A, 50B selon l'axe Y1, respectivement Y2.

Des organes de réglage 54A, respectivement 54B, comportant en particulier un système à vis de pression 54'A et 54'B, permettent de régler la position des ergots 50A et 50B par rapport à l'axe moyen X-X', afin de pouvoir écarter ou rapprocher les ergots 50A et 50B de l'axe moyen X-X'.

Des moyens de rappel 56 permettent de maintenir le mécanisme de décapsulage 32 dans une position dans laquelle les couteaux 34A et 34B sont situés entre la bague 44 et le bord libre des crénelures 40 de la capsule 36.

Cet étrier 46 constitue une partie mobile du mécanisme de décapsulage 32 qui permet d'optimiser la position extrême des couteaux 34A et 34B par rapport au goulot de la bouteille grâce à des organes de compensation prévus sur le mécanisme de décapsulage 32. Ces organes de compensation permettant de compenser les différences dimensionnelles qui peuvent intervenir d'une bouteille à l'autre et ainsi éviter d'endommager le buvant de la bouteille.

A cet effet, le mécanisme de décapsulage 32 comporte en outre une fourche 63 qui permet une certaine mobilité de l'étrier 46 portant les couteaux 34A et 34B par rapport à la bouteille. La fourche 63 est formée par une portion 64 centrale d'extrémité libre et par deux bras 65 respectivement pourvus d'un ergot 67. Chacun des ergots 67 est respectivement engagé dans une des lumières 69 longitudinales respectives qui sont prévues à cet effet dans les bras 65 de la fourche 63, de sorte que l'étrier 46 puisse coulisser par rapport à la fourche 63 et ainsi permettre de les rapprocher ou de les écarter l'un de l'autre.

Une butée 33 réglable en longueur est par ailleurs reliée au mécanisme de décapsulage 32 de manière à pouvoir venir en appui sur le col de la bouteille et limiter la course possible de l'étrier 46 par rapport à la fourche 63.

Comme décrit plus en détails par la suite, ces organes de compensation permettent à l'opérateur de régler la position extrême des couteaux et ainsi d'optimiser le dégorgement des bouteilles. En effet, on comprend que dès lors que les couteaux sont trop écartés du goulot, ils ne vont pas pouvoir agir correctement sur la capsule. En outre, les lumières 69 permettent une certaine mobilité de l'étrier pendant cette opération de dégorgement, permettant ainsi de réduire l'effort des couteaux sur le buvant de la bouteille et évitant de ce fait la casse de ce dernier qui peut se produire en cas d'effort trop important.

En référence aux figures 2 et 3, le mécanisme de décapsulage 32 est fixé de manière réglable sur un longeron 16' du support 16. La portion 64 est pourvue d'une lumière 66 centrale préférentiellement longitudinale dans laquelle vient s'insérer le longeron 16' du support 16.

Un premier organe de réglage 58 permettant le réglage en hauteur du mécanisme de décapsulage 32 par rapport au support 16 est prévu. Cet organe de réglage 58 comporte par exemple une vis qui permet de régler la hauteur H entre le support 16 et le mécanisme de décapsulage 32. Cette hauteur H est par exemple mesurée entre le point de contact 35 des couteaux décapsuleurs 34A et 34B, et l'axe moyen X-X'. Ainsi, un déplacement relatif du mécanisme de décapsulage 32 est possible pour l'écarter ou le rapprocher du support 16. Il s'ensuit que le mécanisme de décapsulage 32 peut être réglé en hauteur à l'aide de l'organe de réglage 58 en faisant coulisser la portion 64 selon la flèche F1 (figure 2) par rapport au longeron 16' du support 16.

L'appareil de dégorgement 10 comporte en outre un deuxième organe de réglage 60 permettant de régler l'inclinaison du mécanisme de décapsulage 32 par rapport au support 16. En l'espèce, le mécanisme de décapsulage 32 est fixé sur le longeron 16' du support 16 en étant libre de pouvoir pivoter autour de l'axe moyen X-X' selon la flèche F₂ (figure 3). Dès que l'organe de réglage 60, et en particulier la poignée 62 qu'il comporte, n'exerce pas de pression sur la portion 64, le mécanisme de décapsulage 32 peut avoir un débattement angulaire par rapport à la verticale. Ainsi, l'inclinaison des bords d'extrémité libre 38A et 38B peut varier et les angles α1 et α2 peuvent être ajustés par rapport à l'axe vertical Y. Les angles α1 et α2 peuvent notamment avoir des valeurs différentes.

L'appareil de dégorgement 10 comporte en outre un troisième organe de réglage 68 permettant de régler l'écartement L du mécanisme de décapsulage 32 par rapport au support 16. A cet effet, l'organe de réglage 68 permet l'allongement du longeron 16' du support 16 par rapport à la bague semi-circulaire 24. Ainsi, on comprend que le mécanisme de décapsulage 32 peut être écarté ou rapproché par rapport à la bague semi-circulaire 24, le long de l'axe moyen X-X' selon la flèche F₃ (figure 2).

Comme décrit plus en détails par la suite, ces trois organes de réglage 58, 60 et 68 permettent d'adapter l'appareil de dégorgement à différents formats de bouteilles.

Dans ces opérations de dégorgement de vin mousseux, il est essentiel que le vin contenu dans la bouteille 18 ne soit pas trop longtemps en contact avec l'air, afin d'éviter toute oxydation du vin. De ce fait, il est nécessaire d'obturer au plus vite le goulot de la bouteille 18 après décapsulage.

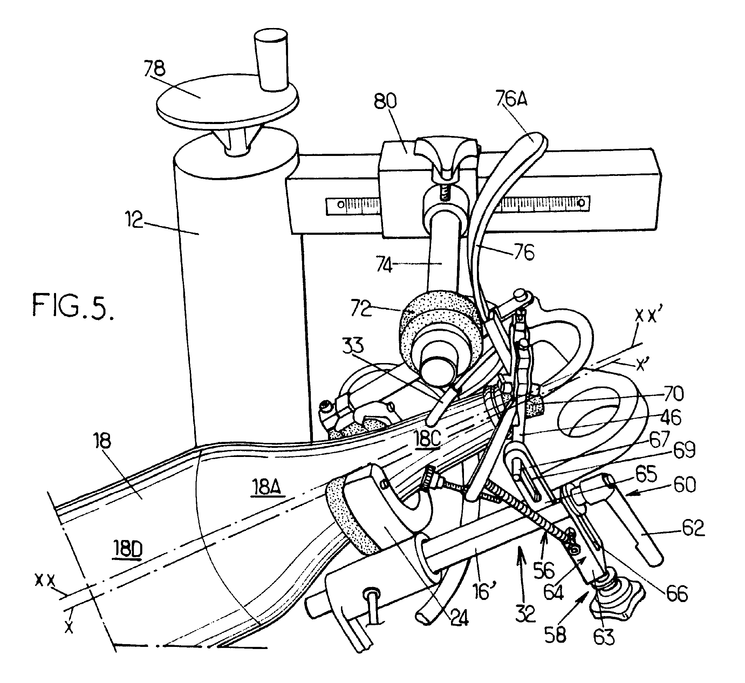

A cet effet, l'appareil de dégorgement 10 comporte en outre un organe formant bouchon 70 destiné à obturer au moins provisoirement le goulot 18B de la bouteille 18 après le retrait de la capsule 36. Cet organe formant bouchon 70 est monté pivotant sur le mécanisme basculant 14, de sorte qu'il peut adopter une position d'ouverture, tel qu'illustré sur la figure 1 ou 2, dans laquelle il n'obture pas la bouteille 18, et une position de fermeture, tel qu'illustré sur la figure 5, dans laquelle il obture la bouteille 18.

Cet organe formant bouchon 70 est commandé en synchronisme avec le pivotement du mécanisme basculant 14. De manière connue en soi, le déplacement de l'organe formant bouchon 70, en l'espèce le pivotement de celui-ci, est commandé pneumatiquement en étant actionné par un capteur pneumatique décrit plus en détails par la suite.

Le mécanisme basculant 14 est commandé par des moyens pneumatiques 71 de type connu et ne sont donc pas décrits. L'appareil de dégorgement 10 comprend en outre un système de synchronisation du décapsulage en fonction de la position du goulot 18B de la bouteille 18 par rapport à l'horizontale. En l'espèce, l'appareil de dégorgement 10 comporte un galet 72 monté rotatif sur un axe 74 horizontal qui est fixé au bâti 12 de manière réglable. Le mécanisme basculant 14 comporte de son côté, une portion de came 76 destinée à venir au contact du galet 72 pour faire pivoter le mécanisme de décapsulage 32 et ainsi permettre le retrait automatique de la capsule 36 pendant que la bouteille 18 est basculée vers le haut.

Dans la position basse du mécanisme basculant 14, tel qu'illustré sur la figure 1, la portion de came 76 n'est pas encore au contact du galet 72. Lorsque le mécanisme basculant 14 commence à basculer vers le haut, la portion de came 76 vient au contact du galet 72 par sa portion d'extrémité libre 76A, puis glisse contre le galet 72 entraînant de ce fait, le pivotement du mécanisme de décapsulage 32 par rapport au support 16.

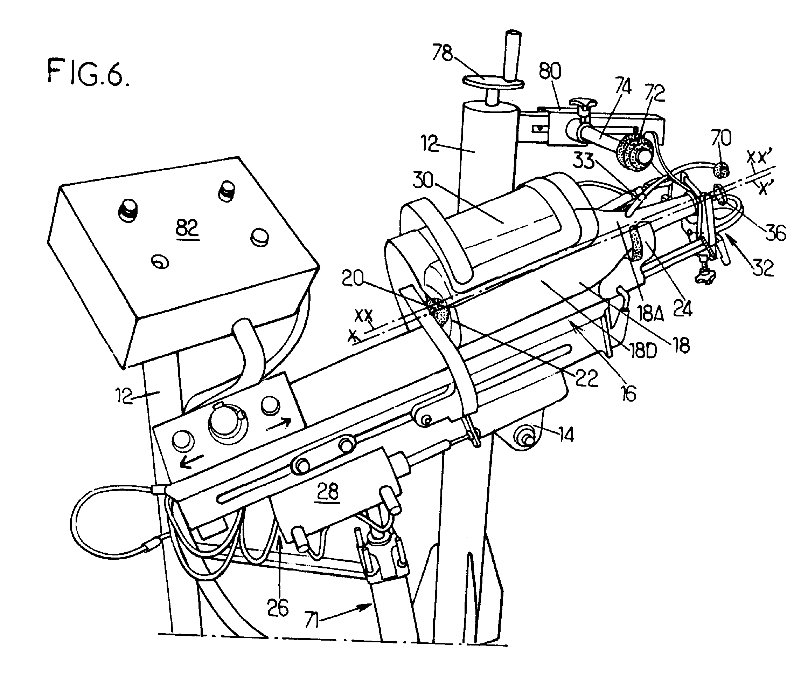

Dans une position angulaire déterminée, tel qu'illustré sur la figure 6, les couteaux décapsuleurs 34A et 34B écartent la capsule 36 du goulot 18C de la bouteille 18. Dès lors, sous l'effet de la libération du gaz sous pression formé dans la bouteille, la capsule 36, ainsi que le dépôt formé par l'excédent de fermentation de vin sont éjectés hors de la bouteille. Généralement un peu de vin est aussi éjecté au cours du dégorgement.

Un dispositif de récupération (non illustré) de la capsule 36, du dépôt et du vin éjecté peut être prévu pour des raisons de sécurité pour l'opérateur et pour récolter la capsule 36, le dépôt et le vin éjectés.

Nous allons à présent décrire les étapes du procédé de dégorgement.

A partir de la position basse du mécanisme basculant 14, illustrée sur la figure 1, l'opérateur met en place une bouteille 18 avec son goulot 18A incliné vers le bas et obturé par une capsule 36, en venant d'une part, loger le gris de col 18A sur la bague semi-circulaire 24 et en faisant, d'autre part, coulisser la calotte formant butée 20 jusqu'à ce qu'elle coopère avec le creux 22 formé dans le fond de la bouteille 18.

Pendant que l'opérateur met en place la bouteille 18 sur le support 14, les couteaux 34A et 34B se soulèvent pour laisser passer la capsule 36, puis retombent de suite sous leur propre poids en se rapprochant de l'axe moyen X-X'.

L'opérateur vérifie alors que les couteaux 34A et 34B viennent bien se positionner entre la bague 44 de la bouteille 18 et le bord libre des crénelures 40 de la capsule 36. Dans le cas contraire, et en particulier lorsque l'axe XX-XX' de la bouteille est décalé par rapport à l'axe moyen X-X', l'opérateur peut agir, d'une part, sur les organes de compensation de l'étrier 46 et, d'autre part, sur les trois organes de réglages 58, 60 et 68 précités du mécanisme de décapsulage 32.

L'opérateur peut ainsi agir sur la position des couteaux 34A et 34B en réglant la position de la butée 33. Il est préférable que cette dernière soit juste au contact du col de la bouteille. Dans le cas contraire, l'opérateur agit sur la butée 33 pour l'écarter ou la rapprocher de l'étrier 46.

L'opérateur peut en outre agir sur la position du mécanisme de décapsulage 32 selon trois directions (hauteur, écartement, inclinaison) par rapport au support 16, en faisant l'un et/ou l'autre réglage suivant :
- réglage de la hauteur du mécanisme de décapsulage 32 pour que l'une au moins des portions d'extrémité libre 42A et 42B des couteaux 34A et 34B vienne au contact à l'arrière d'au moins une crénelure 40 de la capsule 36,
- réglage de l'inclinaison du mécanisme de décapsulage 32 en faisant pivoter l'étrier 46 par rapport à l'axe moyen X-X', pour que l'un au moins des bords d'extrémité libre 38A et 38B des couteaux 34A et 34B vienne au contact à l'arrière d'au moins une crénelure 40 de la capsule 36,
- réglage de l'écartement du mécanisme de décapsulage 32 par rapport à la bague 24 de la bouteille, pour que les portions d'extrémité libre 42A et 42B viennent se positionner entre la bague 44 de la bouteille et l'arrière des crénelures 40 de la capsule 36.

Ces réglages permettent d'adapter l'appareil de dégorgement à tous types de formats de bouteilles 18 et aussi de pallier aux variations géométriques que peuvent présenter les bouteilles d'un même format. En effet, d'un format à l'autre, mais aussi pour un même format, les bouteilles ne présentent pas toujours la même longueur de goulot 18C ni le même diamètre de goulot ; de même, le buvant peut être légèrement incliné par rapport à l'axe longitudinal XX-XX' de la bouteille, de sorte que la capsule 36 n'est pas réellement perpendiculaire à cet axe XX-XX'.

Ces variations de géométrie d'une bouteille à l'autre entraînent pour les appareils de dégorgement connus pour lesquels le mécanisme de dégorgement de décapsulage n'est pas réglable, un risque de fracture du goulot ou un échec dans l'opération de dégorgement. Pour pallier à ces inconvénients, l'appareil de dégorgement selon l'invention permet par l'intermédiaire des différents réglages précités de hauteur, inclinaison et/ou écartement du mécanisme de décapsulage 32, de rattraper l'écart entre l'axe longitudinal XX-XX' de la bouteille et l'axe moyen X-X' du support 14.

Dès que l'opérateur a effectué ces réglages, l'appareil de dégorgement est fin prêt pour un usage semi-automatique facile, y compris pour un opérateur non familier avec le dégorgement en général et tout particulièrement avec le dégorgement des bouteilles de grande capacité à partir du jéroboam.

Ces opérations de réglage ne sont pas nécessairement effectuées à chaque changement de bouteille. En général, les bouteilles d'un même format, d'une même série et en provenance d'un même verrier présentent les mêmes caractéristiques géométriques. De ce fait, l'opérateur effectue préférentiellement ces opérations lors de la mise en place de la première bouteille de la série, puis s'assure simplement que les couteaux décapsuleurs sont bien positionnés pour chacune des bouteilles. Par contre, on comprend que ces réglages doivent préférentiellement être réalisés dès que l'opérateur constate un décalage et, bien sûr, dès qu'il change de série de bouteilles et/ou de format.

Le moment précis du dégorgement peut en outre être réglé à l'aide d'un organe de réglage en hauteur 78 du galet 72 et d'un organe de réglage longitudinal 80 qui permettent de régler l'écartement de la came 72 par rapport au support 16.

Après mise en place de la bouteille et réglage(s) éventuel(s), le couvercle 30 est basculé pour venir protéger l'opérateur. Ce dernier commande alors le basculement du mécanisme basculant 14 à l'aide de moyens pneumatiques 71 commandés par des moyens de commande 82 de type connu illustrés sur la figure 1 et non décrits en détails ici.

A une position angulaire déterminée, tel qu'illustré par exemple sur la figure 6, dans laquelle le goulot 18C de la bouteille se situe déjà au-dessus de l'horizontale, l'extrémité libre 76A de la portion de came 76 commence à coopérer avec le galet 72. Le pivotement vers le haut du mécanisme basculant 14 se poursuivant, il s'ensuit que le mécanisme de décapsulage 32 commence à pivoter, car la came 76 est au contact du galet 72. La capsule 36 commence à être retirée et le gaz sous pression à être éjecté, entraînant avec lui le dépôt hors de la bouteille.

Dès que la came 76 arrive en fin de course, tel qu'illustré sur la figure 5, l'organe formant bouchon 70 est actionné automatiquement et vient obturer le goulot 18C de la bouteille 18. A cet effet, un capteur de fin de position de la came situé au niveau du mécanisme basculant 14, permet d'actionner les moyens pneumatiques, en l'espèce un vérin 73 relié à l'organe formant bouchon 70 et permet de faire pivoter ce dernier.

L'opération de dégorgement est alors terminée. L'opérateur commande l'ouverture du couvercle 30 et celle de l'organe formant bouchon 70 et peut retirer la bouteille 18.

## Revendications

1. Appareil de dégorgement de vins mousseux destiné à retirer la capsule (36) obturant le goulot (18C) d'une bouteille (18) contenant du vin mousseux, comprenant :
- un bâti (12),
- un mécanisme basculant (14) comprenant :
- un support (16) adapté pour supporter une bouteille (18) dans une position prédéterminée dans laquelle ladite bouteille (18) s'étend longitudinalement selon un axe longitudinal XX-XX' voisin d'un axe moyen X-X' fixe par rapport audit support (16), ledit support (16) étant monté mobile sur le bâti (12) entre une position basse, dans laquelle le goulot (18C) de la bouteille (18) est incliné vers le bas, et une position haute, dans laquelle le goulot (18C) de la bouteille (18) est incliné vers le haut, et
- un mécanisme de décapsulage (32) pourvu d'au moins un couteau décapsuleur (34A, 34B), ledit mécanisme de décapsulage (32) étant monté mobile sur le support (16) et commandé en synchronisme avec ledit support (16) pour que ledit au moins un couteau décapsuleur (34A, 34B) retire la capsule (36), lorsque le support (16) est dans une position angulaire déterminée par rapport à l'horizontale,
**caractérisé en ce que** ledit au moins un couteau décapsuleur (34A, 34B) est mobile par rapport au mécanisme de décapsulage (32) pour se rapprocher et s'éloigner dudit axe moyen X-X', ledit couteau décapsuleur (34A, 34B) étant sollicité vers ledit axe moyen X-X'.

2. Appareil de dégorgement selon la revendication précédente, dans lequel ledit au moins un couteau décapsuleur (34A, 34B) coulisse sous son propre poids dans le mécanisme de décapsulage (32).

3. Appareil de dégorgement selon la revendication 1 ou 2, dans lequel le couteau décapsuleur (34A, 34B) présente un bord d'extrémité libre (38A, 38B) qui est incliné par rapport à l'horizontale et une portion d'extrémité (42A, 42B) biseautée.

4. Appareil de dégorgement selon l'une quelconque des revendications précédentes, dans lequel le dispositif décapsulant (32) comprend deux couteaux décapsuleurs (34A, 34B).

5. Appareil de dégorgement selon les revendications 3 et 4, dans lequel l'inclinaison du bord d'extrémité libre (38A, 38B) de l'un des deux couteaux décapsuleurs (34A, 34B) est opposée à l'inclinaison du bord d'extrémité libre (38A, 38B) de l'autre des deux couteaux décapsuleurs (34A, 34B).

6. Appareil de dégorgement selon l'une quelconque des revendications précédentes, dans lequel le support (16) est coulissant par rapport au mécanisme basculant (14) selon l'axe XX'.

7. Appareil de dégorgement selon l'une quelconque des revendications précédentes, comprenant en outre un galet (72) monté rotatif autour d'un axe (74) fixé au bâti (12) de manière réglable, le mécanisme basculant (14) comprenant en outre une portion de came (76) destinée à venir au contact dudit galet (72) pour faire pivoter le mécanisme de décapsulage (32) et ainsi retirer la capsule (36).

8. Appareil de dégorgement selon l'une quelconque des revendications précédentes, dans lequel le mécanisme de décapsulage (32) comporte une partie mobile (46) sur laquelle est fixé ledit au moins un couteau décapsuleur (34A, 34B) et des organes de compensation (33, 67, 69) permettant d'optimiser la position dudit au moins un couteau décapsuleur (34A, 34B) par rapport au goulot.

9. Appareil de dégorgement selon la revendication précédente, comprenant en outre des organes de réglage (78, 80) de l'axe (74) du galet qui permettent de régler le synchronisme du mécanisme de décapsulage (32).

10. Appareil de dégorgement selon l'une quelconque des revendications précédentes, comprenant en outre des organes de réglage (58, 60, 68) permettant le réglage du mécanisme de décapsulage (32) par rapport au support (16), en hauteur (H), en inclinaison (α1, α2) et/ou en écartement (L).

11. Appareil de dégorgement selon l'une quelconque des revendications précédentes, comprenant en outre un organe formant bouchon (70) destiné à obturer provisoirement le goulot (18C) de la bouteille (18) après retrait de la capsule (36), ledit organe formant bouchon (70) étant mobile entre une position d'ouverture dans laquelle il est écarté de la bouteille (18) et une position de fermeture dans laquelle il obture le goulot (18C) de la bouteille (18).

12. Procédé de dégorgement de vins mousseux destiné à retirer une capsule (36) obturant un goulot (18C) d'une bouteille (18) contenant du vin mousseux, ce procédé comprenant les étapes suivantes :
- mise en place de la bouteille (18) sur le support (16) d'un appareil de dégorgement (10) selon l'une quelconque des revendications précédentes, lorsque ledit support (16) est en position basse,
- mise en position automatique dudit au moins un couteau décapsuleur (34A, 34B) par rapport à la bouteille (18),
- basculement automatique de la bouteille (18) vers la position haute et retrait automatique de la capsule (36) de la bouteille (18) pendant ledit basculement, avec éjection simultanée du dépôt contenu dans le goulot (18C) de la bouteille (18).

13. Procédé de dégorgement selon la revendication précédente, dans lequel la mise en position automatique dudit au moins un couteau décapsuleur (34A, 34B) est réalisée par soulèvement puis relâchement automatique du couteau décapsuleur (34A, 34B) entre le bord libre des crénelures de la capsule (36) et la bague (44) de la bouteille (18) lors de la mise en place de la bouteille (18).

14. Procédé de dégorgement selon la revendication 12 ou 13, dans lequel dès la fin du retrait de la capsule (36), la bouteille (18) est automatiquement obturée.

15. Procédé de dégorgement selon l'une quelconque des revendications 12 à 14, dans lequel le support (16) coulisse vers ledit au moins un couteau décapsuleur (34A, 34B), avant le basculement automatique de la bouteille vers la position haute.

## Claims

1. An apparatus for the removal of sediment from sparkling wines, designed to remove the capsule (36) covering the neck (18C) of a bottle (18) containing sparkling wine, comprising:
- a frame (12),
- a tilting mechanism (14) comprising:
- a holder (16) for supporting a bottle (18) in a predetermined position in which said bottle (18) extends longitudinally along a longitudinal axis XX-XX' close to a median axis X-X' which is fixed with respect to said holder (16), said holder (16) being movable on the frame (12) between a low position, in which the neck (18C) of the bottle (18) is inclined downward, and a high position, in which the neck (18C) of the bottle (18) is inclined upward, and
- a capsule-removing mechanism (32) provided with at least one capsule-removing knife (34A, 34B), said capsule-removing mechanism (32) being movable on the holder (16) and synchronized with said holder (16) so that said at least one capsule-removing knife (34A, 34B) removes the capsule (36) when the holder (16) is in a predetermined angular position relative to the horizontal,
**characterized in that** said at least one capsule-removing knife (34A, 34B) is movable relative to the capsule-removing mechanism (32) in order to approach and to move away from said median axis X-X', said capsule-removing knife (34A, 34B) being urged toward said median axis X-X'.

2. The apparatus for the removal of sediment according to the preceding claim, wherein said at least one capsule-removing knife (34A, 34B) slides under its own weight in the capsule-removing mechanism (32).

3. The apparatus for the removal of sediment according to claim 1 or 2, wherein the capsule-removing knife (34A, 34B) has a free end edge (38A, 38B) that is inclined relative to the horizontal and a beveled end portion (42A, 42B).

4. The apparatus for the removal of sediment according to any one of the preceding claims, wherein the capsule-removing device (32) comprises two capsule-removing knives (34A, 34B).

5. The apparatus for the removal of sediment according to claims 3 and 4, wherein the inclination of the free end edge (38A, 38B) of one of the two capsule-removing knives (34A, 34B) opposes the inclination of the free end edge (38A, 38B) of the other of the two capsule-removing knives (34A, 34B).

6. The apparatus for the removal of sediment according to any one of the preceding claims, wherein the holder (16) slides relative to the tilting mechanism (14) along the axis XX'.

7. The apparatus for the removal of sediment according to any one of the preceding claims, further comprising a roller (72) mounted rotatably about a shaft (74) fixed to the frame (12) in an adjustable manner, the tilting mechanism (14) further comprising a cam portion (76) designed to come into contact with said roller (72) in order to pivot the capsule-removing mechanism (32) and thus remove the capsule (36).

8. The apparatus for the removal of sediment according to any one of the preceding claims, wherein the capsule-removing mechanism (32) includes a movable part (46) on which is fixed said at least one capsule-removing knife (34A, 34B) and compensation members (33, 67, 69) allowing optimization of the position of said at least one capsule-removing knife (34A, 34B) relative to the neck.

9. The apparatus for the removal of sediment according to the preceding claim, further comprising members (78, 80) for adjusting the shaft (74) of the roller that make it possible to adjust the synchronicity of the capsule-removing mechanism (32).

10. The apparatus for the removal of sediment according to any one of the preceding claims, further comprising adjustment members (58, 60, 68) that allow the adjustment of the capsule-removing mechanism (32) relative to the holder (16), in terms of height (H), in terms of inclination (α1, α2) and/or in terms of spacing (L).

11. The apparatus for the removal of sediment according to any one of the preceding claims, further comprising a cap member (70) designed to temporarily close the neck (18C) of the bottle (18) after removal of the capsule (36), said cap member (70) being movable between an open position, in which it is distanced from the bottle (18), and a closed position, in which it closes the neck (18C) of the bottle (18).

12. A method for the removal of sediment from sparkling wines designed to remove a capsule (36) covering a neck (18C) of a bottle (18) containing sparkling wine, said method comprising the following steps:
- positioning the bottle (18) on the holder (16) of an apparatus (10) for the removal of sediment as claimed in any one of the preceding claims, when said holder (16) is in the low position,
- automatic positioning of said at least one capsule-removing knife (34A, 34B) relative to the bottle (18),
- automatic tilting of the bottle (18) toward the high position and automatic removal of the capsule (36) from the bottle (18) during said tilting, with simultaneous ejection of the sediment contained in the neck (18C) of the bottle (18).

13. The method for the removal of sediment according to the preceding claim, wherein the automatic positioning of said at least one capsule-removing knife (34A, 34B) is achieved by means of lifting then automatic release of the capsule-removing knife (34A, 34B) between the free edge of the indentations of the capsule (36) and the ring (44) of the bottle (18) during positioning of the bottle (18).

14. The method for the removal of sediment according to claim 12 or 13, wherein, after removal of the capsule (36), the bottle (18) is automatically closed.

15. The method for the removal of sediment according to claims 12 to 14, wherein the holder (16) slides toward said at least one capsule-removing knife (34A, 34B) prior to the automatic tilting of the bottle toward the high position.

## Patentansprüche

1. Degorgiervorrichtung für Schaumweine, die dazu bestimmt ist, die Kapsel (36) zu entfernen, welche den Flaschenhals (18C) einer Schaumwein enthaltenden Flasche (18) verschließt, umfassend:
- ein Gestell (12),
- ein Kipp-Mechanismus (14), umfassend:
- einen Halter (16), der angepasst ist, um eine Flasche (18) in einer vorbestimmten Position zu halten, in welcher die Flasche (18) sich longitudinal längs einer Longitudinal-Achse XX-XX' erstreckt, benachbart zu einer Mittelachse X-X', die in Bezug zu dem Halter (16) fest ist, wobei der Halter (16) an dem Gestell (12) zwischen einer niedrigen Position, in welcher der Flaschenhals (18C) der Flasche (18) nach unten geneigt ist, und einer hohen Position, in welcher der Flaschenhals (18C) der Flasche (18) nach oben geneigt ist, beweglich angebracht ist, und
- einen Kapsel-Entfernungs-Mechanismus (32), der mit wenigstens einem Kapsel-Entfernungs-Messer (34A, 34B) versehen ist, wobei der Kapsel-Entfernungs-Mechanismus (32) beweglich an dem Halter (16) montiert ist und synchron mit dem Halter (16) gesteuert wird, so dass das wenigstens eine Kapsel-Entfernungs-Messer (34A, 34B) die Kapsel (36) entfernt, wenn der Halter (16) sich in einer bestimmten WinkelPosition in Bezug zu der Horizontalen befindet,
**dadurch gekennzeichnet, dass** das wenigstens eine Kapsel-Entfernungs-Messer (34A, 34B) beweglich in Bezug zu dem Kapsel-Entfernungs-Mechanismus (32) ist, um sich an die Mittelachse X-X' anzunähern und sich von dieser zu entfernen, wobei das Kapsel-Entfernungs-Messer (34A, 34B) zu der Mittelachse X-X' hin gedrängt wird.

2. Degorgiervorrichtung nach dem vorhergehenden Anspruch, wobei das wenigstens eine Kapsel-Entfernungs-Messer (34A, 34B) unter seinem eigenen Gewicht in dem Kapsel-Entfernungs-Mechanismus (32) gleitet.

3. Degorgiervorrichtung nach Anspruch 1 oder 2, wobei das Kapsel-Entfernungs-Messer (34A, 34B) einen Rand am freien Ende (38A, 38B) aufweist, der in Bezug zu der Horizontalen geneigt ist, und einen abgeschrägten Endabschnitt (42A, 42B).

4. Degorgiervorrichtung nach einem der vorhergehenden Ansprüche, wobei die Kapsel-Entfernungs-Vorrichtung (32) zwei Kapsel-Entfernungs-Messer (34A, 34B) umfasst.

5. Degorgiervorrichtung nach den Ansprüchen 3 und 4 wobei die Neigung des Rands am freien Ende (38A, 38B) von dem einem der zwei Kapsel-Entfernungs-Messer (34A, 34B) entgegengesetzt ist zu der Neigung des Rands am freien Ende (38A, 38B) von dem anderen der zwei Kapsel-Entfernungs-Messer (34A, 34B).

6. Degorgiervorrichtung nach einem der vorhergehenden Ansprüche, wobei der Halter (16) in Bezug auf den Kipp-Mechanismus (14) entlang der Achse X-X' gleitend ist.

7. Degorgiervorrichtung nach einem der vorhergehenden Ansprüche, umfassend weiterhin eine Rolle (72), die um eine Achse (74) drehbar angebracht ist, welche in regulierbarer Weise an dem Gestell (12) befestigt ist, wobei der Kipp-Mechanismus (14) weiterhin einen Nocken-Abschnitt (76) umfasst, der dazu bestimmt ist, in Kontakt mit der Rolle (72) zu kommen, um den Kapsel-Entfernungs-Mechanismus (32) schwenken zu lassen und so die Kapsel (36) zu entfernen.

8. Degorgiervorrichtung nach einem der vorhergehenden Ansprüche, wobei der Kapsel-Entfernungs-Mechanismus (32) einen beweglichen Teil (46) umfasst, an welchem das wenigstens eine Kapsel-Entfernungs-Messer (34A, 34B) befestigt ist, und Kompensations-Elemente (33, 67, 69), welche es ermöglichen, die Position des wenigstens einen Kapsel-Entfernungs-Messers (34A, 34B) in Bezug auf den Flaschenhals zu optimieren.

9. Degorgiervorrichtung nach dem vorhergehenden Anspruch, weiterhin umfassend Steuer-/Regelelemente (78, 80) für die Achse (74) der Rolle, welche es ermöglichen, den Synchronismus des Kapsel-Entfernungs-Mechanismus (32) zu steuern/regeln.

10. Degorgiervorrichtung nach einem der vorhergehenden Ansprüche, weiterhin umfassend Steuer-/Regelelemente (58, 60, 68), welche die Steuerung/Regelung des Kapsel-Entfernungs-Mechanismus (32) in Bezug auf den Halter (16) in der Höhe (H), in der Neigung (α1, α2) oder/und im Abstand (L) ermöglichen.

11. Degorgiervorrichtung nach einem der vorhergehenden Ansprüche, weiterhin umfassend ein Element, welches einen Stopfen (70) bildet, der dazu bestimmt ist, den Flaschenhals (18C) der Flasche (18) nach dem Entfernen der Kapsel (36) provisorisch zu verschließen, wobei das einen Stopfen (70) bildende Element beweglich ist zwischen einer Öffnungsposition, in welcher es von der Flasche (18) beanstandet ist, und einer Schließposition, in welcher es den Flaschenhals (18C) der Flasche (18) verschließt.

12. Degorgierverfahren für Schaumweine, dazu bestimmt eine Kapsel (36) zu entfernen, welche einen Flaschenhals (18 C) einer Schaumwein enthaltenden Flasche (18) verschließt, wobei das Verfahren die folgenden Schritte umfasst:
- Platzieren der Flasche (18) auf dem Halter (16) einer Degorgiervorrichtung (10) gemäß einem der vorhergehenden Ansprüche, wobei der Halter (16) sich in der niedrigen Position befindet,
- automatische Positionierung des wenigstens einen Kapsel-Entfernungs-Messers (34A, 34B) in Bezug auf die Flasche (18),
- automatisches Kippen der Flasche (18) zu der hohen Position und automatisches Entfernen der Kapsel (36) von der Flasche (18) während des Kippens, mit gleichzeitigem Ausstoß von Ablagerungen, die in dem Flaschenhals (18C) der Flasche (18) enthalten sind.

13. Degorgierverfahren nach dem vorhergehenden Anspruch, wobei die automatische Positionierung des wenigstens einen Kapsel-Entfernungs-Messers (34A, 34B) realisiert wird durch Hochheben und anschließendes automatisches Freigeben des Kapsel-Entfernungs-Messers (34A, 34B) zwischen dem freien Rand der Zacken der Kapsel (36) und dem Ring (44) der Flasche (18) bei dem Platzieren der Flasche (18).

14. Degorgierverfahren nach Anspruch 12 oder 13, wobei, sobald das Entfernen der Kapsel (36) beendet ist, die Flasche (18) automatisch verschlossen wird.

15. Degorgierverfahren nach einem der Ansprüche 12 bis 14, wobei der Halter (16) vor dem automatischen Kippen der Flasche zu der hohen Position zu dem wenigstens einen Kapsel-Entfernungs-Messer (34A, 34B) hin gleitet.
